# EUROPÄISCHE PATENTSCHRIFT

(11) **EP 0 629 819 B1**
(45) Veröffentlichungstag und Bekanntmachung des Hinweises auf die Patenterteilung: **06.08.1997**
(21) Anmeldenummer: 94109134.0
(22) Anmeldetag: 15.06.1994
(51) Int. Cl.: F23K 5/14, F16L 41/03

(54) **Anschlussgruppenstück für automatische Heizölentlüfter**
Joining piece for automatic fuel oil air exhaust
Bloc de raccord pour connexion de purgeur d'air automatique pour marout

(30) Priorität: 16.06.1993 DE 9308951 U
(43) Veröffentlichungstag der Anmeldung: 21.12.1994
(73) Patentinhaber: HANS G. WERNER GmbH & CO., D-70176 Stuttgart (DE)
(72) Erfinder: Marenbach, Günter, D-53773 Hennef (DE)
(74) Vertreter: Fechner, Joachim, Dr.-Ing.

(56) Entgegenhaltungen:
- WO-A-89/12779
- US-A- 2 974 724
- US-A- 4 498 693

## Beschreibung

Die Erfindung betrifft ein Anschlußgruppenstück für automatische Heizölentlüfter.

Aus US-A-2 974 724 ist ein Luftablaßventil einer Heizölleitung bekannt, dessen Handgriff als Schale ausgebildet ist, so daß bei der Entlüftung mit austretendes Öl in der Schale aufgefangen werden kann. Das Ventil besteht aus einem horizontalen Rohrstück mit einem senkrecht dazu ausgerichteten Schenkel mit Gewindebohrung, in die der an den schalenförmigen Handgriff angeformte Ventilkörper eingeschraubt ist. Das bekannte Gerät hat nur einen einzigen Ventilanschluß. Es ist auch nicht für den Anschluß automatischer Heizölentlüfter geeignet, die von dem zu entlüftenden Ölstrom durchflossen werden und je Entlüfter drei Anschlüsse erfordern.

Der Erfindung liegt die Aufgabe zugrunde, eine Vorrichtung zu schaffen, durch welche die Montage von mehreren Heizölentlüftern vereinfacht wird, so daß ein geringerer Zeitaufwand benötigt wird. Ferner soll eine solche Vorrichtung geschaffen werden, die nur mit einigen Handgriffen auf höhere Leistung erweitert werden kann.

Diese Aufgabe wird durch ein Anschlußgruppenstück für automatische Heizölentlüfter gelöst, das gekennzeichnet ist durch einen Gehäuseblock mit einer durchgehenden Bohrung für den Anschluß der Zulaufleitung von einem Heizöltank, einer durchgehenden Bohrung für den Anschluß der Rücklaufleitung vom Brenner, einer durchgehenden Bohrung für den Anschluß der Vorlaufleitung zum Brenner und Anschlußbohrungen an die drei durchgehenden Bohrungen für den Anschluß von parallel geschalteten, in Reihe angeordneten Heizölentlüftern. Das erfindungsgemäße Anschlußgruppenstück kommt ohne eine aufwendige Montage aus, weil die Parallelschaltung der Heizölentlüfter durch die Bohrungen in dem Block fest vorgegeben ist. Es ist nur erforderlich, die Heizölentlüfter an die Anschlußbohrungen und die genannten Leitungen an die entsprechenden durchgehenden Bohrungen anzuschließen und noch offene Bohrungen ebenfalls durch Schrauben zu verschliessen. Vorzugsweise ist der Anschluß von bis zu drei Heizölentlüftern vorgesehen.

Bei dem bevorzugten Anschlußgruppenstück der Erfindung sind die durchgehenden Bohrungen beidendig mit Gewinde versehen. Für die Erweiterung auf eine höhere Leistung können zwei Anschlußgruppenstücke durch Verschraubungen verbunden werden.

Das erfindungsgemäße Anschlußgruppenstick ist für den Saug- und Druckbetrieb der Heizölentlüfter geeignet.

Das erfindungsgemäße Anschlußgruppenstück wird an Hand der Zeichnung näher beschrieben. Es zeigen
Figur 1 eine Seitenansicht des Anschlußgruppenstücks, teilweise im Schnitt;
Figur 2 eine Draufsicht der Anschlußleiste für die Rücklaufleitungen vom Brenner;
Figur 3 einen Schnitt nach der Linie A-A der Figur 1,
Figur 4 die Anordnung des Anschlußgruppenstücks in einer Ölleitung, und
Figur 5 einen Schnitt analog zu Fig. 3 einer zweiten Ausführungsform des erfindungsgemäßen Anschlußgruppenstücks.

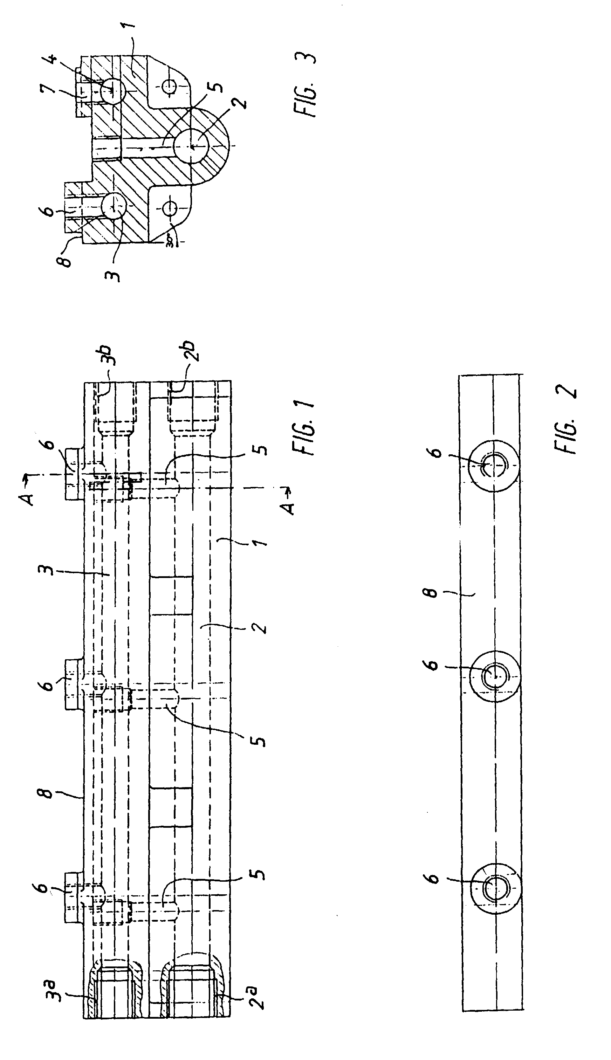

Nach den Figuren 1 bis 3 besteht das Anschlußgruppenstück aus einem Gehäuseblock 1 mit einer durchgehenden Bohrung 2 für den Anschluß der Zulaufleitung vom Heizöltank, einer durchgehenden Bohrung 3 für den Anschluß der Rücklaufleitung von dem Brenner und einer durchgehenden Leitung 4 für den Anschluß der Vorlaufleitung zum Brenner. Die durchgehenden Bohrungen 2-4 haben beidendig Innengewinde 2^{a},2^{b}, 3^{a},3^{b} für den Anschluß der genannten Leitungen bzw. eines weiteren Anschlußgruppenstücks zwecks Erweiterung der Leistung. Das dargestellte Anschlußgruppenstück ist für den Anschluß von bis zu drei Heizölentlüftern geeignet. Demzufolge hat die durchgehende Bohrung 2 drei Anschlußbohrungen 5 für den Anschluß der Tankzulaufstutzen der Heizölentlüfter. Die durchgehende Leitung 3 hat ebenfalls drei Anschlußbohrungen 6 für den Anschluß des Brennerrücklaufstutzens des Heizölentlüfters. Schließlich hat die durchgehende Leitung 4 ebenfalls drei Anschlußbohrungen 7 für den Anschluß des vorlaufstutzens der Heizölentlüfter. Bewegliche Teile enthält das erfindungsgemäße Anschlußgruppenstück nicht.

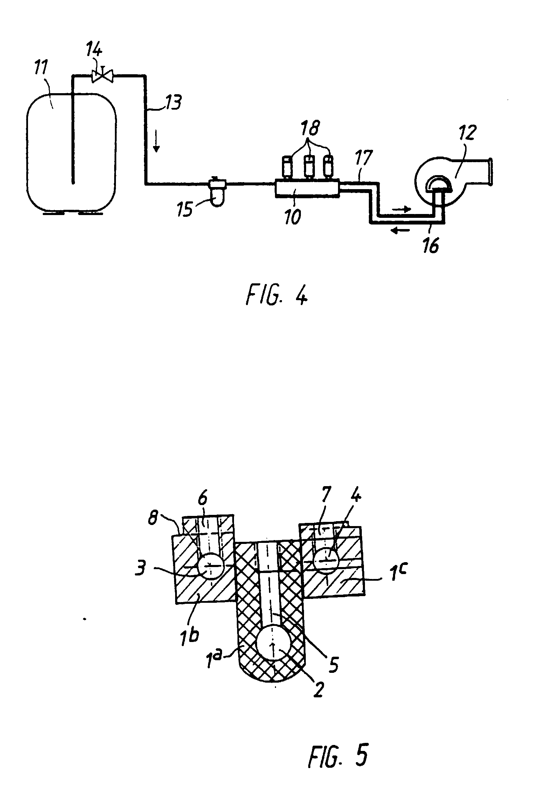

Figur 4 zeigt die Anordnung des erfindungsgemäßen Anschlußgruppenstücks in der Heizölleitung zwischen einem Öltank 11 und einem Brenner 12. Die Zulaufleitung 13 vom Öltank 11 ist an die durchgehende Bohrung 3 (nicht dargestellt) des Anschlußgruppenstücks 10 angeschlossen und enthält einen Kugelhahn 14 und ein Filter 15. Die Rücklaufleitung 16 von dem Brenner 12 ist an die durchgehende Bohrung 3 (nicht dargestellt) des Anschlußgruppenstücks angeschlossen, und die Vorlaufleitung 17 zum Brenner 12 ist an die durchgehende Bohrung 4 (nicht dargestellt) des Anschlußgruppenstücks 10 angeschlossen. Die den drei Anschlußstellen der Leitungen 13, 16 und 17 entgegengesetzten Anschlüsse der Bohrungen 2,3 bzw. 4 sind durch Stopfen verschlossen. Auf das Anschlußgruppenstück 10 sind drei Heizöl-Automatikentlüfter 18, z.B. Wöma-Entlüfter Flow Control, aufgeschraubt.

Das erfindungsgemäße Anschlußgruppenstück besteht im allgemeinen aus Leichtmetall, z.B. einer Aluminiumlegierung. Es wird als Strangpreßprofilstück hergestellt mit nachträglicher Einbringung der Anschlußbohrungen 5,6,7.

Das in Fig. 5 im Querschnitt gezeigte Anschlußgruppenstück besteht aus drei Gehäuseteilblöcken 1^{a}, 1^{b} und 1^{c}, die jeweils nur eine durchgehende Bohrung 2,3 bzw. 4 mit den Anschlußbohrungen 5, 6 bzw. 7 enthalten. Durch die Montage der Entlüfter 18 werden die Teilblöcke 1^{a},1^{b},1^{c}praktisch zu einem Gehäuseblock vereinigt.

### Bezugszeichenliste

- 1: Gehäuseblock
- 2: durchgehende Bohrung
- 2^{a}: Innengewinde
- 2^{b}: Innengewinde
- 3: durchgehende Bohrung
- 3^{a}: Innengewinde
- 3^{b}: Innengewinde
- 4: durchgehende Bohrung
- 5: Anschlußbohrung
- 6: Anschlußbohrung
- 7: Anschlußbohrung
- 8: Anschlußleiste
- 10: Anschlußgruppenstück
- 11: Öltank
- 12: Brenner
- 13: Zulaufleitung
- 14: Kugelhahn
- 15: Filter
- 16: Rücklaufleitung
- 17: Vorlaufleitung
- 18: Heizölautomatikentlüfter

## Patentansprüche

1. Anschlußgruppenstück für automatische Heizölentlüfter, mit einem Gehäuseblock (1) mit einer durchgehenden Bohrung (2) für den Anschluß der Zulaufleitung (13) von einem Heizöltank (11), einer durchgehenden Bohrung (3) für den Anschluß der Rücklaufleitung (16) von einem Brenner (12), einer durchgehenden Bohrung (4) für den Anschluß der Vorlaufleitung (17) zum Brenner (12) und Anschlußbohrungen (5,6,7) an die drei durchgehenden Bohrungen (2 bzw. 3 bzw. 4) für den Anschluß der parallel geschalteten, in Reihe angeordneten Heizölentlüfter (18) an die drei Bohrungen (2, 3 und 4).

2. Anschlußgruppenstück nach Anspruch 1, dadurch gekennzeichnet, daß die durchgehenden Bohrungen (2,3,4) beidendig mit Gewinde (2^{a},2^{b}; 3^{a},3^{b}) versehen sind.

3. Anschlußgruppenstück nach Anspruch 1 oder 2, dadurch gekennzeichnet, daß es für den Saug- und Druckbetrieb der Heizölentlüfter geeignet ist.

4. Anschlußgruppenstück nach einem der Ansprüche 1 bis 3, dadurch gekennzeichnet, daß es im wesentlichen als Strangpreßprofilstück aus Leichtmetall hergestellt ist.

5. Anschlußgruppenstück nach einem der Ansprüche 1 bis 4, dadurch gekennzeichnet, daß es Anschlußbohrungen (5,6,7) für den Anschluß von zwei oder drei Heizölentlüftern (18) enthält.

6. Anschlußgruppenstück nach einem der Ansprüche 1 bus 5, dadurch gekennzeichnet, daß der Gehäuseblock (1) aus drei Teilblöcken (1^{a},1^{b},1^{c}) mit je einer durchgehenden Bohrung (2 bzw. 3 bzw. 4) besteht, die durch die aufgeschraubten Heizölentlüfter (18) zusammengespannt sind.

## Claims

1. Multiple-connection block for automatic fuel oil de-aerators comprising a housing block (1) having a through bore (2) for connecting the feed line (13) from a fuel oil tank (11), a through bore (3) for connecting the return line (16) from a burner (12), a through bore (4) for connecting the forward flow line (17) to the burner (12) and connecting bores (5,6,7) to the three through bores (2,3,4 respectively) for connecting the paralleled, serially arranged fuel oil de-aerators (18) to the three bores (2,3 and 4)

2. Multiple-connection block according to claim 1, characterized in that the through bores (2,3,4) are provided with threads at both ends.

3. Multiple-connection block according to claim 1 or 2, characterized in that it is suitable for suction and pressure operation of the fuel oil de-aerators.

4. Multiple-connection block according to any of the claims 1 to 3, characterized in that it is manufactured as a profiled extrusion body from light metal.

5. Multiple-connection block according to any of the claims 1 to 4, characterized in that it contains connecting bores (5,6,7) for connecting two or three fuel oil de-aerators (18).

6. Multiple-connection block according to any of the claims 1 to 5, characterized in that the housing block (1) consists of three partial blocks (1^{a},1^{b},1^{c}) having a through bore (2,3,4 respectively) each and being held together by the fuel oil de-aerators (18) screwed thereon.

## Revendications

1. Pièce de raccordement multiple pour des aérateurs automatiques pour pétrole lourd, muni d'un boîtier de type bloc (1) comprenant un alésage traversant (2) pour le raccordement du conduit aller (13) d'un réservoir de pétrole lourd (11), un alésage traversant (3) pour le raccordement du conduit retour (16) d'un brûleur (12), un alésage traversant (4) pour le raccordement du conduit aller (17) au brûleur (12), ainsi que des alésages de raccordement (5, 6, 7) aux trois alésages traversants (2, respectivement 3, respectivement 4) pour le raccordement des aérateurs sériels pour pétrole lourd (18) montés en parallèle aux trois alésages (2, 3 et 4).

2. Pièce de raccordement multiple selon la revendication 1, caractérisée en ce que les alésages traversants (2, 3, 4) sont munis, à leurs deux extrémités, de filets (2^{a}, 2^{b}; 3^{a}, 3^{b}).

3. Pièce de raccordement multiple selon la revendication 1 ou 2, caractérisée en ce qu'elle est appropriée pour le fonctionnement par aspiration et par pression des aérateurs pour pétrole lourd.

4. Pièce de raccordement multiple selon l'une quelconque des revendications 1 à 3, caractérisée en ce qu'elle est réalisée essentiellement en métal léger sous forme d'un profilé moulé par extrusion.

5. Pièce de raccordement multiple selon l'une quelconque des revendications 1 à 4, caractérisée en ce qu'elle contient des alésages de raccordement (5, 6, 7) pour le raccordement de deux ou de trois aérateurs pour pétrole lourd (18).

6. Pièce de raccordement multiple selon l'une quelconque des revendications 1 à 5, caractérisée en ce que le boîtier de type bloc (1) est constitué par trois blocs partiels (1^{a}, 1^{b}, 1^{c}) possédant respectivement un alésage traversant (2, respectivement 3, respectivement 4) qui sont serrés ensemble par le vissage des aérateurs pour pétrole lourd (18).
